(19) **Europäisches Patentamt**
**European Patent Office**
**Office européen des brevets**

(11) **EP 1 600 954 B1**

(12) **EUROPEAN PATENT SPECIFICATION**

(45) Date of publication and mention
of the grant of the patent:
**12.03.2008 Bulletin 2008/11**

(51) Int Cl.:
*G11B 5/70* *(2006.01)*    *G11B 5/735* *(2006.01)*

(21) Application number: **05011193.9**

(22) Date of filing: **24.05.2005**

(54) **Magnetic recording and reproducing method and magnetic recording medium for the method**

Magnetisches Aufzeichnungs- und Wiedergabeverfahren und magnetisches Aufzeichnungsmittel für das Verfahren

Procédé d'enregistrement et reproduction magnétique et moyen magnétique d'enregistrement pour le procédé

(84) Designated Contracting States:
**DE FR GB**

(30) Priority: **24.05.2004 JP 2004152858**

(43) Date of publication of application:
**30.11.2005 Bulletin 2005/48**

(73) Proprietor: **FUJIFILM Corporation**
**Minato-ku**
**Tokyo (JP)**

(72) Inventor: **Takeda, Toshiharu**
**Odawara-shi**
**Kanagawa (JP)**

(74) Representative: **HOFFMANN EITLE**
**Patent- und Rechtsanwälte**
**Arabellastrasse 4**
**81925 München (DE)**

(56) References cited:
**JP-A- 2000 040 218**    **JP-A- 2001 084 549**
**US-A1- 2003 049 493**    **US-A1- 2004 076 855**

Remarks:
The file contains technical information submitted after the application was filed and not included in this specification

**Description**

## BACKGROUND OF THE INVENTION

### TECHNICAL FIELD OF THE INVENTION

The present invention relates to a magnetic recording and reproducing method and a magnetic recording medium to be used for the method and, particularly, to a magnetic recording and reproducing method which is intended to reduce spacing loss and depress drop-out and is adapted for the use of a reproducing head (MR head) utilizing a magnetoresistance element (MR element) and to a magnetic recording medium to be used for the method.

### DESCRIPTION OF THE RELATED ART

In the field of a tape for data backup, tapes having a memory capacity of as large as 100 GB or more per reel have been placed on the market with the increase of the capacity of hard disc whose data are the object of the backup, and thus it is necessary to further increase the capacity of a tape for data backup in order to cope with a further increase in capacity of hard disc in the near future.

In order to increase capacity of the backup tape per reel, it is necessary to reduce the whole thickness of the tape to thereby extend the length of the tape per reel, to extremely reduce the thickness of a magnetic layer to a thickness of as thin as 0.2 $\mu$m or less which serves to reduce thickness loss and shorten the recording wavelength, and to reduce the track width to a level of 10 $\mu$m or less with increasing the recording density in the width direction.

However, when the thickness of the magnetic layer is reduced to 0.2 $\mu$m or less, there results such a deteriorated durability that it becomes necessary to provide at least one undercoat layer between the non-magnetic support and the magnetic layer. Also, when the recording wavelength is shortened, influences of spacing between the magnetic layer and the magnetic head become so large that, when there are depressions on the surface of the magnetic layer, spacing loss can result in a broadened half height width of output peak (PW50) or a reduction of output, leading to a higher error rate. Further, when the track width is reduced to 10 $\mu$m or less and increase recording density in the width direction, leakage flux from the magnetic recording medium becomes so small that it is required to use as a reproduction head an MR head which can yield a high output from an extremely small flux.

In order to remove fatal errors which can lead to actual troubles, JP-A-2001-84549 proposes a magnetic recording medium comprising a support having formed thereon a magnetic layer containing a ferromagnetic powder and a binder as major components, which is used for the magnetic recording and reproducing system based on the linear serpentine system employing RLL2-7 modulation system, and in which the surface of the magnetic layer has 10/46237.5 $\mu$m$^2$ or less depressions of 50 nm or more in depth measured by a non-contacting surface roughness meter, with the maximum depth Rv being 100 nm or less. According to the investigation by the inventor of the present invention, however, it has been found that, in the case of conducting high-density digital recording, i.e., in the case where the reproducing bit area becomes small, reduction of generation of dropout can not be prevented by only controlling the number of depressions of 50 nm or more in depth existing on the surface of the magnetic layer.

## SUMMARY OF THE INVENTION

An object of the invention is to provide a magnetic recording and reproducing method which is intended to reduce the spacing loss and depress dropout and which is adapted for the use of an MR head and a magnetic recording medium to be used for the method.

The inventor has found that, in order to depress dropout, it is effective to control cross-sectional area of depressions existing on the surface of the magnetic layer in addition to controlling of the depth and number of the depressions.

That is, the invention is as follows.

(1) A magnetic recording and reproducing method of recording or reproducing information using a magnetic recording medium comprising a non-magnetic support having provided thereon at least a magnetic layer containing a ferromagnetic powder dispersed in a binder, and a back layer on the other side of support, which comprises using a magnetic recording medium satisfying the following requirements:

magnetic recording medium: having on the surface of the magnetic layer 20/(260x350 $\mu$m$^2$) or less depressions with a depth of 1/3 or more of the recording bit length and a cross-sectional area of 1/2 or more of the reproducing bit area; back layer: having a modulus of elasticity in the range of from 4.9 to 14.7 GPa.

(2) The magnetic recording and reproducing method as described in (1) described above, wherein an MR head is used as a reproducing means for information.

(3) A magnetic recording medium for use in the magnetic recording and reproducing method as described in (1) described above comprising a non-magnetic support having provided thereon at least a magnetic layer containing a ferromagnetic powder dispersed in a binder, which comprises having on the surface of the magnetic layer 20/ ($260 \times 350 \mu m^2$) or less depressions with a depth of 1/3 or more of the recording bit length and a cross-sectional area of 1/2 or more of the reproducing bit area.

(4) The magnetic recording medium as described in (3) descried above, wherein the magnetic layer has a thickness of 0.20 $\mu$m or less.

(5) The magnetic recording medium as described in (3) or (4) described above, wherein the total thickness of the magnetic recording medium is 8 $\mu$m or less.

According to the present invention, by controlling the depth and number of the depressions existing on the surface of the magnetic layer, there can be provided the magnetic recording and reproducing method and the... magnetic recording medium for use in.the.method which is suitable for use of MR head in addition to achieve reduction of spacing loss and depression of dropout.

## DETAILED DESCRIPTION OF THE INVENTION

The invention is described in more detail below.

The invention is characterized in that, in the magnetic recording and reproducing method using a magnetic recording medium comprising a non-magnetic support having provided thereon at least one magnetic layer containing a ferromagnetic powder dispersed in a binder, the magnetic recording medium satisfies the following requirements:

the number of depressions having a depth of 1/3 or more of recording bit length and a cross-sectional area of 1/2 or more of the reproducing bit area being 20/($260 \times 350 \mu m^2$) or less.

Here, the reproducing bit area is determined by the product of the reproduction track width and the recording bit length.

In order to control the number of the depressions on the surface of the magnetic layer to 20 or less, which is one of the above-mentioned requirements, there may be illustrated, for example, (i) a technique of providing a back layer on the opposite surface of the non-magnetic support (surface on which the magnetic layer is not provided) with adjusting the kind and the addition amount of coarse particles contained therein and (ii) a technique of using a plurality of binders in the back layer to thereby adjust modulus of elasticity of the back layer.

The back layer in the technique (i) is described below.

The back layer can be constituted by, for example, carbon black and an abrasive (as coarse particles), a binder, and other additives.

In general, magnetic tapes for use in recording data from a computer, a better running durability is strongly required in comparison with video tapes and audio tapes. In order to maintain such a high running durability, it is preferred to incorporate carbon black and an inorganic powder in the back layer. As the carbon black, it is preferred to use two or more kinds of carbon blacks in combination which are different from each other in average particle size. In this case, it is preferred to use a fine carbon black of from 10 to 50 nm in average particle size and a coarse carbon black of from 51 to 300 nm in average particle size in combination. The average particle size of the fine carbon black is particularly preferably from 16 to 40 nm. The ratio of the fine carbon black to the coarse carbon black is preferably in the range of from 98:2 to 75:25 (the former : the latter), more preferably from 97:3 to 85:15. In general, addition of the fine carbon black serves to reduce the surface electric resistance and transmission of light. Some magnetic recording apparatuses utilize the transmission of the tape as signals for their operation. In such cases, addition of the fine carbon black is particularly effective. Also, the fine carbon black is generally excellent in the ability of retaining a liquid lubricant and, in the case of using a lubricant in combination therewith, contributes to reduction of coefficient of friction. On the other hand, the coarse carbon black of 230 to 300 nm in average particle size functions as a solid lubricant and forms fine projections on the surface of the back layer which serves to reduce the contact area and, thus, reduce coefficient of friction. However, the coarse carbon black has the defect that, in severe running system, it is liable to drop out from the back layer due to sliding movement of the tape, leading to an increase in error ratio.

Specific examples of commercially available products of fine carbon black include the following. Additionally, numerals within the parentheses are average particle sizes. BLACK PEARLES 80.0 (17 nm), BLACK PEARLS 1400 (13 nm), BLACK PEARLS 1300 (13 nm), BLACK PEARLS 1100 (14 nm), BLACK PEARLS 1000 (16 nm), BLACK PEARLS 900 (15 nm), BLACK PEARLS 880 (16 nm), BLACK PEARLS 4630 (19 nm), BLACK PEARLS 460 (28 nm), BLACK PEARLS 430 (28 nm), BLACK PEARLS 280 (45 nm), MONARCH 800 (17 nm), MONARCH 14000 (13 nm), MONARCH 1300 (13 nm), MONARCH 1100 (14 nm), MONARCH 1000 (16 nm), MONARCH 900 (15 nm), MONARCH 880 (16 nm), MONARCH 630 (19 nm), MONARCH 430 (28 nm), MONARCH 280 (45 nm), REGAL 330 (25 nm), REGAL 250 (34 nm), REGAL 99 (38 nm), REGAL 400 (25 nm), REGAL 660 (24 nm) (these being products of Cabot Co.), RAVEN 2000B (18 nm), RAVEN 1500B (17 nm), RAVEN 7000 (11 nm), RAVEN 5750 (12 nm), RAVEN 5250 (16 nm), RAVEN 3500 (13 nm), RAVEN 2500 ULTRA (13 nm), RAVEN 2000 (18 nm), RAVEN 1500 (17 nm), RAVEN 1255 (21 nm), RAVEN 1250 (20 nm), RAVEN 1190 ULTRA (21 nm), RAVEN 1170 (21 nm), RAVEN 1100 ULTRA (32 nm), RAVEN 1080 ULTRA (28 nm), RAVEN 1060 ULTRA (30 nm), RAVEN 1040 (28 nm), RAVEN 880 ULTRA (30 nm), RAVEN 860 (39 nm), RAVEN 850 (34 nm), RAVEN 820 (32 nm), RAVEN 790 ULTRA (30 nm), RAVEN 780 ULTRA (29 nm), RAVEN 760 ULTRA (30 nm) (these being products of Colombian Carbon Co.), ASAHI #90 (19 nm), ASAHI #80 (22 nm), ASAHI #70 (28 nm), ASAHI F-200 (35 nm), ASAHI #60HN (40 nm), ASAHI #60 (45 nm), HS-500 (38 nm) (these being products of Asahi Carbon. Co.), #2700. (13 nm), #2650 (13 nm), #2400 (14 nm), #1000 (18 nm), #950 (16 nm), #850 (17 nm), #750 (22 nm), #650 (22 nm), #52 (27 nm), #50 (28 nm), #40 (24 nm), #30 (30 nm), #25 (47 nm), #95 (40 nm), CF9 (40 nm), #4350 (50 nm), #3040 (50 nm) (these being products of Mitsubishi Chemical Corporation), PRINNTEX 90 (14 nm), PRINTEX 95 (15 nm), PRINTEX 85 (16 nm), PRINTEX 75 (17 nm) (these being products of Degussa Co.), and #3950 (16 nm) (product of Mitsubishi Kasei Kogyo K.K.).

Specific examples of the commercially available products of the coarse carbon black include BLACK PEARLS 130 (75 nm), MONARCH 120 (75 nm) (these being products of Cabot Co.), RAVEN 520 ULTRA (68 nm), RAVEN 510 ULTRA (58 nm), RAVEN .500 (53 nm), RAVEN 460 (67 nm), RAVEN 450 (75 nm), RAVEN 420 (86 nm), RAVEN 410 (101 nm), RAVEN 22 (83 nm), RAVEN 16 (68 nm), RAVEN 14 (55 nm), RAVEN MTP (275 nm) (these being products of Colombian Carbon Co.), ASAHI #55 (66 nm), ASAHI 50H (85 nm), ASAHI #51 (91 nm) , ASAHI #50 (80 nm), ASAHI #35 (78 nm), ASAHI #15 (122 nm) (these being products of Asahi Carbon Co.), #10 (75 nm), #5 (76 nm), #4010 (75 nm), #3030 (55 nm) (these being products of Mitsubishi Chemical Corporation) and ERMAL BLACK (270 nm) (product of Kernculp (phonetic) Co.).

The content of carbon black (sum of the two kinds of carbon blacks) in the back layer is in the range of from 40 to 100 parts by weight, preferably from 50 to 90 parts by weight, per 100 parts by weight of the binder.

Examples of the abrasive include hard inorganic powders of from 5 to 9 in Mohs' scale of hardness, $\alpha$-iron oxide, $\alpha$-alumina and chromium oxide ($Cr_2O_3$). The particle size thereof is preferably from 80 to 250 $\mu$m, particularly preferably from 100 to 210 $\mu$m. The amount of the abrasive to be used is preferably from 0.3 to 30 parts by weight per 100 parts by weight of the whole carbon blacks.

Also, as the binder, there may be used resins such as nitrocellulose, phenoxy resin, vinyl chloride-based resin and polyurethane resin independently or in combination thereof. The amount of the binder to be used is in the range of preferably from 100 to 250 parts by weight per 100 parts by weight of the carbon black in the back layer.

Next, the back layer in the technique (ii) is described below. In this technique, plural binders are used in combination in the back layer to thereby adjust the modulus of elasticity of the back layer. The term "modulus of elasticity" as used herein means a Young's modulus (W) measured according the method disclosed in JP-A-2004-94988, and is from 500 to 1500 kg/mm$^2$ (from 4.9 to 14.7 G.Pa), preferably from 1000 to 1500 kg/mm$^2$ (from 9.8 to 14.7 GPa). Additionally, the Young's modulus (W) is determined by pressing a triangular pyramid-shaped diamond penetrator of 100 nm in radius of curvature at the tip, 65° in blade angle and 115° in arris angle into the back layer with a load of 6 mgf (58.8 $\mu$N) to obtain a load removal curve and calculating according to the following formula (1):

$$W = 1.8H_1^{-1} \ (dP/dH)(MPa) \qquad (1)$$

wherein $H_1$ represents displacement of a tangential line at the maximum displacement of the load removal curve under a load of 0, and dP/dH represents a slope of the tangential line at the maximum displacement of the load removal curve.

Examples of the binder include nitrocellulose resin, polyester-polyurethane resin, and polyisocyanate resin. The amount of the binder to be used is in the range of preferably from 100 to 250 parts by weight per 100 parts by weight of carbon black in the back layer.

The thickness of the back layer is set to be in the range of preferably from 0.05 to 0.7$\mu$m, more preferably from 0.1 to 0.6 $\mu$m, still more preferably from 0.3 to 0.5 $\mu$m.

Thus, there can be obtained a magnetic recording medium wherein the number of depressions having a.depth of 1/3 or more of the recording bit length and a cross-sectional area of 1/2 or more of the reproducing bit area and being formed on the surface of the magnetic layer is adjusted to be 20/ (260x350 $\mu$m$^2$) or less. The number of the depressions on the surface of the magnetic layer is preferably 15/(260x350 $\mu$m$^2$) or less.

Here, measurement of the depressions can be conducted by using a commercially available three-dimensional surface structure analyzer with setting the measuring view to be 260 $\mu$m x 350 $\mu$m. In the present specification, shape and number of the depressions were measured by means of a three-dimensional surface structure analyzer of New View 5022 (manufactured by ZYGO Co.) according to the white light interference method with a scan length of 5 $\mu$m

and a measuring view of 260 $\mu$m x 350 $\mu$m, and subjecting the measured surface to a filter treatment of high-pass filter (HPF):1.65 $\mu$m and low-pass filter (LPF): 50 $\mu$m.

Additionally, the phrase "depth of 1/3 or more of the recording bit length" as used herein means the depth measured from the average surface plane of the rough surface of the magnetic layer, and the phrase "depression having a cross-sectional area of 1/2 or more of the reproducing bit area" means that the cross-sectional area of the depression formed by slicing the magnetic recording medium by the average plane of the rough surface of the magnetic layer in the horizontal direction is 1/2 or more of the reproducing bit area. Here, the average plane is a plane where the volume of depressions within the measurement lane is equal to the volume of projections there.

Also, the recording bit length in the method of the invention is from 50 to 180 nm, preferably from 70 to 150 nm, and the width of reproduction track is, for example, from 5 to 10 $\mu$m, preferably from 4 to 8 $\mu$m.

The method of the invention permits to use an MR head with depressing dropouts to the utmost.

The constituents of the magnetic recording medium of the invention, such as the magnetic layer, the non-magnetic layer and the non-magnetic support, are described in detail below.

[Magnetic layer]

As the ferromagnetic powder to be contained in the magnetic layer, a ferromagnetic metal powder and a hexagonal ferrite powder are preferred. The particle size thereof in terms of average major axis length is preferably from 10 to 60 nm, more preferably from 10 to 45 nm. Such particle size of the ferromagnetic powder serves to increase the packing degree of the ferromagnetic powder and enhance high-density recording performance of the magnetic recording medium.

<Ferromagnetic metal powder>

The ferromagnetic metal powder to be used in the magnetic layer of the invention is not particularly limited as long as it contains Fe as a major component (including alloys). A ferromagnetic alloy powder containing $\alpha$-Fe as a major component is preferred. This ferromagnetic powder may contain atoms such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr or B in addition to the predetermined atom. Those which contain at least one member selected from the group consisting of Al, Si, Ca, Y, Ba, La, Nd, Co, Ni and B, in addition to $\alpha$-Fe, are preferred. More specifically, those which contain 10 to 40 atom % of Co, 2 to 20 atom % of Al and 1 to 15 atom % of Y, based on Fe, are preferred.

Also, these ferromagnetic metal powders may be subjected to treatment with a dispersing agent, a lubricant, a surfactant or an antistatic agent prior to the dispersing step. The ferromagnetic metal powder may contain a small amount of water, hydroxide or oxide.

As to shape of the ferromagnetic metal powder, any of an acicular shape, a granular shape, a rice grain-like shape and a platy shape may be employed. It is particularly preferred to use an acicular ferromagnetic metal powder.

With the acicular ferromagnetic metal powder, the average major axis length is preferably from 10 to 60 nm, more preferably from 10 to 45 nm. The acicular ratio is preferably from 2 to 7, more preferably from 5 to 7. Such particle size of the ferromagnetic powder serves to increase the packing degree of the ferromagnetic powder and enhance high-density recording performance of the magnetic recording medium.

The crystallite size of the ferromagnetic metal powder preferably ranges from 8 to 20 nm, more preferably from 10 to 18 nm, still more preferably from 12 to 16 nm. The crystallite size is the average value obtained by Scherrer method from the half width of the diffraction peak under conditions of a CuK$\alpha$1 radiation source, a tube voltage of 50 kV, and a tube current of 300 mA using an X-ray diffraction device (RINT 2000 series made by Rigaku Corporation).

The specific surface area ($S_{BET}$) of the ferromagnetic metal powder by the BET method is preferably from 40 $m^2$/g to less than 80 $m^2$/g, more preferably from 40 to 70 $m^2$/g. Within this range, it is possible to simultaneously achieve both good surface properties and low noise. The pH of the ferromagnetic metal powder is preferably optimized in combination with the binder employed. The range is preferably from 4 to 12, more preferably from 7 to 10. When necessary, the ferromagnetic metal powder may be surface treated with Al, Si, P or an oxide thereof. The amount employed is from 0.1 to 10 % of the ferromagnetic metal powder. Such surface treatment serves to reduce the adsorption amount of a lubricant such as a fatty acid to 100 mg/$m^2$ or less, thus being preferred.

The coercive force (Hc) of the ferromagnetic metal powder preferably ranges from 159.2 to 238.8 kA/m (from 2000 to 3000 Oe), more preferably from 167.2 to 230.8 kA/m (from 2100 to 2900 Oe). The saturation magnetic flux density preferably ranges from 150 to 300 mT (from 1500 to 3000 G), more preferably from 160 to 290 mT (from 1600 to 2900 G). The saturation magnetization ($\sigma$s) preferably ranges from 90 to 140 A•$m^2$/kg (from 90 to 140 emu/g), more preferably from 95 to 130 A•$m^2$ (from 95 to 130 emu/g).

A ferromagnetic metal powder with a low SFD (switching field distribution) is preferred, with 0.8 or less being preferred. An SFD of 0.8 or less than that affords good electromagnetic conversion characteristics, high output, sharp magnetic reversal, and little peak shift, which is ..suited to high-density.. digital magnetic recording. Methods of achieving a low Hc distribution include improving the particle size distribution of goethite in the ferromagnetic metal powder, employing monodisperse $\alpha$-Fe2O3, and preventing sintering of particles, and the like.

The ferromagnetic metal powder to be employed may be obtained by known manufacturing methods, examples of which are: reducing iron oxide or water-containing iron oxide, that has been treated to prevent sintering, with a reducing gas such as hydrogen to obtain Fe or Fe-Co particles; reducing a composite organic acid salt (chiefly a salt of oxalic acid) with a reducing gas such as hydrogen; thermally decomposing a metal carbonyl compound; reduction by adding a reducing agent such as sodium boron hydride, hypophosphite or hydrazine to the aqueous solution of a ferromagnetic metal; and evaporating a metal in an inert gas at a low pressure to obtain fine powder. The ferromagnetic powder thus obtained is subjected to a known slow oxidation treatment. The method of reducing iron oxide or water-containing iron oxide with a reducing gas such as hydrogen and controlling partial pressure of oxygen-containing gas and inert gas, the temperature and the time to form an oxide film on the surface is preferred due to.low demagnetisation.

<Ferromagnetic hexagonal ferrite powder>

The ferromagnetic hexagonal ferrite powder includes substitution products such as barium ferrite, strontium ferrite, lead ferrite and calcium ferrite, and Co substitution products thereof. More specific examples include magnetoplumbite-type barium ferrite and strontium ferrite; magnetoplumbite-type ferrite in which the particle surfaces are covered with spinels; and magnetoplumbite-type barium ferrite, strontium ferrite, and the like .partly comprising a spinel phase. The following may be incorporated in addition to the prescribed atoms: Al, Si, S, Sc, Ti, V, Cr, Cu, Y, Mo, Rh, Pd, Ag, Sn, Sb, Te, Ba, Ta, W, Re, Au, Hg, Pb, Bi, La, Ce, Pr, Nd, P, Co, Mn, Zn, Ni, Sr, B, Ge and Nb. Those to which elements such as Co-Zn, Co-Ti, Co-Ti-Zr, Co-Ti-Zn, Ni-Ti-Zn, Nb-Zn-Co, Sb-Zn-Co or Nb-Zn have been added may generally also be employed. They may contain specific impurities depending on the starting materials and manufacturing methods.

The particle size of the ferromagnetic hexagonal ferrite powder is preferably from 10 to 60 nm, more preferably from 10 to 45 nm. The average tabular ratio (diameter of plate/thickness of plate) is from 1 to 15, preferably from 1 to 7. If the average tabular ratio is from 1 to 15, it is possible to achieve sufficient orientation properties while maintaining a high packing property in the magnetic layer, as well as to prevent noise increase due to stacking between particles. In addition, the specific surface area by BET method within the above-mentioned particle size is from 10 to 200 $m^2$/g, almost corresponding to a value calculated from the particle plate diameter and the plate thickness.

For the ferromagnetic hexagonal ferrite powder, narrow distributions of particle plate diameter and plate thickness are normally preferred. To render the plate diameter and the plate thickness of the particles in number form, 500 particles can be randomly measured in a TEM photograph of particles to make a comparison. The distributions of the particle plate diameter and plate thickness are often not a normal distribution. However, when expressed as the standard deviation to the average size, $\sigma$/average size = 0.1 to 2.0. It is also conducted to render the particle producing system as uniform as possible and subject the produced particles to a distribution-enhancing treatment to achieve a sharp particle size distribution. For example, methods such as selectively dissolving ultrafine particles in an acid solution are known.

The coercive force (Hc) of the hexagonal ferrite particles is preferably from 161.6. to 400 kA/m (from 2020 to 5000 Oe), more preferably from 200 to 32.0 kG/m (from 2500 to 4000 Oe), and SFD is preferably from 0.3 to 0.7.

The coercive force (Hc) can be controlled by particle size (plate diameter and plate thickness), the kinds and quantities of elements contained, substitution sites of the element, and the particle producing reaction conditions.

The saturation magnetization ($\sigma$s) of the hexagonal ferrite particles is from 40 to 80 A•$m^2$/kg (emu/g). The higher saturation magnetization ($\sigma$s) is preferred. However, it tends to decrease with a decrease in particle size. In order to improve saturation magnetization ($\sigma$s), it has been well known to combine spinel ferrite with magnetoplumbite ferrite or to select the kind and the amount of an element incorporated. It is also possible to employ W-type hexsagonal ferrite. It is also conducted, when dispersing the magnetic material, to treat the surface of the magnetic material particles with a substance suited to a dispersion medium and a polymer. Both organic and inorganic compounds can be used as surface treating agents. Examples of the principal compounds are oxides and hydroxides of Si, Al and P; various silane coupling agents; and various titanium coupling agents. The addition amount of the surface treating agent ranges from 0.1 to 10% by weight based on the weight of the magnetic material. The pH of the magnetic material is also important for dispersion. A pH of from about 4 to about 12 is usually optimum for the dispersion medium and polymer. From the viewpoint of chemical stability and storage property of the medium, a pH of from about 6 to about 11 can be selected. Moisture contained in the magnetic material also affects dispersion. There is an optimum level for the dispersion medium and polymer, and the moisture content of from 0.01 to 2.0% is usually selected.

Methods of manufacturing the ferromagnetic hexagonal ferrite powder include: (1) a vitrified crystallization method comprising mixing into a desired ferrite composition barium oxide, iron oxide and a metal oxide substituting for ion with a glass forming substance such as boron oxide; rapidly cooling the mixture to obtain an amorphous material; reheating the amorphous material; and washing and pulverizing the product to obtain a barium ferrite crystal powder;

(2) a hydrothermal reaction method comprising neutralizing a barium ferrite composition metal salt solution with an alkali; removing the by-product; heating the liquid phase at 100 °C or higher; washing, drying and pulverizing the product to obtain a barium ferrite crystal powder; and (3) a coprecipitation method comprising neutralizing a barium ferrite composition metal salt solution with an alkali; removing the by-product; drying the product at 1,100 °C or lower; and pulverizing the product to obtain a barium ferrite crystal powder. Any manufacturing method can be selected in the invention. The ferromagnetic hexagonal ferrite powder may be surface treated, as needed, with Al, Si, P or an oxide thereof. The amount may be from 0.1 to 10% per the amount of the ferromagnetic powder and, when the surface treatment is conducted, a lubricant such as a fatty acid is preferably adsorbed in an amount of 100 mg/m$^2$ or less. An inorganic ion in the form of soluble Na, Ca, Fe, Ni or Sr may be in some cases contained in the ferromagnetic powder. These should preferably be substantially not contained but, at a level of 200 pm or less, characteristics are scarcely affected.

<Binders>

Conventionally known thermoplastic resins, thermosetting resins, reactive resins and mixtures thereof may be employed as binders to be used in the magnetic layer of the magnetic recording medium of the invention.
The thermoplastic resins are polymers having a glass transition temperature of from -100 to 150 °C, a number-average molecular weight of from 1,000 to 200,000, preferably from 10,000 to 100,000, and a polymerization degree of from about 50 to about 1,000. Examples thereof are polymers and copolymers containing structural units such as vinyl chloride, vinyl acetate, vinyl alcohol, maleic acid, acrylic acid, acrylic acid esters, vinylidene chloride, acrylonitrile, methacrylic acid, methacrylic acid esters, styrene, butadiene, ethylene, vinyl butyral, vinyl acetal and vinyl ether; polyurethane resins; and various rubber resins.
Also, examples of the thermosetting resins and the reactive resins include phenol resins, epoxy resins, polyurethane cured resins, urea resins, melamine resins, alkyd resins, acrylic reactive resins, formaldehyde resins, silicone resins, epoxy polyamide resins, mixtures of polyester resins and polyisocyanate prepolymers, mixture of polyester polyols and polyisocyanates and mixtures of polyurethane and polyisocyanates. These resins are described in detail in Plastic Handbook published by Asakura Shoten. It is also possible to use a known electron beam-curable resin in each layer. Examples thereof and methods for manufacturing them are described in detail in JP-A-62-256219.
The above-mentioned resins may be used independently or in combination thereof. Preferred examples thereof include a combination of at least one member selected from among a vinyl chloride resin, a vinyl chloride-vinyl acetate copolymer, a vinyl chloride-vinyl acetate-vinyl alcohol copolymer and a vinyl chloride-vinyl acetate-maleic acid anhydride copolymer and a polyurethane resin, and a combination thereof and a polyisocyanate resin.
As the structure of the polyurethane resins, there may be used known ones such as polyester polyurethane, polyether polyurethane, polyether polyester polyurethane, polycarbonate polyurethane, polyester polycarbonate polyurethane and polycaprolactone polyurethane.
With all the binders illustrated hereinbefore, it is preferred as needed to introduce at least one polar group selected from among -COOH, -COO$^-$M$^+$, -SO$_3$H, -SO$_3^-$M$^+$, -OSO$_3$H, -OSO$_3^-$M$^+$, -P=O(OH)$_2$, -P=(O$^-$M$^+$)$_2$, -O-P=O(OH)$_2$, -OP=(O$^-$M$^+$)$_2$, -NR$_2$, -N$^+$R$_3$, an epoxy group, -SH and -CN (wherein M$^+$ represents an alkali metal ion, and R represents a hydrocarbon group) by copolymerization or addition reaction for the purpose of obtaining excellent dispersing property and durability. The amount of such polar group is from 10$^{-1}$ to 10$^{-8}$ mol/g, preferably from 10$^{-2}$ to 10$^{-6}$ mol/g. It is preferred for the polymer to have at least one OH group at each molecular end of polyurethane, thus a total of 2 or more OH groups, in addition to the above-mentioned polar groups. The OH group can form cross-linkage with a curing agent of polyisocyanate to form a three-dimensional network structure, and hence, the higher the number of the OH groups per molecule, the better preferred. In particular, the OH groups are preferably positioned at the end of the molecule, which serves to enhance reactivity with the curing agent. The polyurethane has preferably three or more OH groups, particularly preferably four or more OH groups, at the molecular ends
In the case of using the polyurethane resin in the present invention, the polyurethane has a glass transition temperature of usually from -50 to 150 °C, preferably from 0 °C to 100 °C, particularly preferably from 30 to 100 °C; and an yield point of from 0.05 to 10 Kg/mm$^2$ (from about 0.49 to about 98 MPa). The polyurethane having such physical properties can provide a coating film having good mechanical properties.
Specific examples of these binders to be used in the invention include, as vinyl chloride copolymers, VAGH, VYHH, VMCH, VAGF, VAGD, VROH, VYES, VYNC, VMCC, XYHL, XYSG, PKHH, PKHJ, PKHC and PKFE [trade name; manufactured by Union Carbide Corporation]; MPR-TA, MPR-TA5, MPR-TAL, MPR-TSN, MPR-TMF, MPR-TS, MPR-TM and MPR-TAO [trade name; manufactured by Nissin Kagaku Kogyo K.K.]; 1000W, DX80, DX81, DX82, DX83 and 100FD [trade name; manufactured by Denki Kagaku Kogyo K.K.]; and MR-104, MR-105, MR110, MR100, MR555 and 400X-110A [trade name; manufactured by Nippon Zeon Co., Ltd.].
Examples of the polyurethane resin include Nippollan N2301, N2302 and N2304 [trade name; manufactured by Nippon Polyurethane Co., Ltd.]; Pandex T-5105, T-R3080, T-5201, Burnock D-400, D-210-80, Crisvon 6109 and 7209 [trade name; manufactured by Dainippon Ink & Chemicals Incorporated]; Vylon UR8200, Ur8300, UR-8700, RV530 and RV280 [trade name; manufactured by Toyobo Co., Ltd.]; polycarbonate polyurethane, Daipheramine 4020, 5020, 5100, 5300, 9020, 9022 and 7020 [trade name; manufactured by Dainichiseika Color & Chemicals Mfg. Co., Ltd.]; MX5004 [trade name; manufactured by Mitsubishi Chemical Corporation]; Sanprene SP-150 [trade name; manufactured by Sanyo Chemical Industries, Ltd.]; and Saran F310 and F210 [trade name; manufactured by Asahi Chemical Industry Col, Ltd.].

Examples of the polyisocyanate to be used in the invention include isocyanates such as trilenediisocyanate, 4,4'-diphenylmethanediisocyanate, hexamethylenediisocyanate, xylylenediisocyanate, naphthylene-1,5-diisocyanate, o-toluidinediisocyanate, isophoronediisocyanate and triphenylmethanetriisocyanate; adducts between these isocyanates and polyalcohols; and polyisocyanates produced by condensation of isocyanates.

Commercially available products of the isocyanates include Colonate L, Colonate HL, Colonate 2030, Colonate 2031, Millionate MR and Millionate MTL [manufactured by Nippon Polyurethane Industry Co., Ltd.]; Takenate D-102, Takenate D-110, Takenate D-200 and Takenate D-202 [manufactured by Takeda Chemical Industries, Ltd.]; and Desmodur L, Desmodur IL, Desmodur N and Desmodur HL [manufactured by Sumitomo Bayer Urethane Co., Ltd.]. These may be used independently or as a combination of two or more thereof utilizing difference in curing activity in the respective layers including the magnetic layer.

The binder is used in an amount of generally from 5 to 50 parts by weight, preferably from 10 to 30 parts by weight, per 100 parts by weight of the ferromagnetic powder. In the case of using the vinyl chloride resin as the binder, the vinyl chloride resin is used in amount of generally from 5 to 30 parts by weight per 100 parts by weight of the ferromagnetic powder and, in the case of using the polyurethane resin, the poloyurethane resin is used in an amount of generally from 2 to 20 parts by weight per 100 parts by weight of the ferromagnetic powder. It is preferred to use the polyisocyanate in an amount of from 2 to 20 parts by weight per 100 parts by weight of the ferromagnetic powder in combination with the above-mentioned resin. However, in the case where a head can be corroded by a slight amount of dechlorination, it is possible to use only polyurethane or only polyurethane and isocyanate.

The magnetic recording medium of the invention may comprise two or more magnetic layers or a non-magnetic layer. In such a case, the amount of the binder, the amount of vinyl chloride resin, polyurethane resin, polyisocyanate and other resin, molecular weights and the amount of the polar group of respective resins forming the magnetic layer, or the physical properties of the resins can of course be changed with respective layers, or should rather be optimized. As to this, known techniques related to multi-layered magnetic layers can be applied. For example, in the case of changing kind of binders with each layer, it is effective to increase the amount of binder in the magnetic layer for the purpose of reducing scratches on the surface of the magnetic layer. Also, in order to improve the head touch of the layer against a head, the amount of binder in a non-magnetic layer to be described hereinafter can be increased to impart softness.

<Carbon black>

The magnetic layer of the invention can contain as needed carbon black. Carbon black functions as an antistatic agent for the magnetic layer, a friction coefficient reducer, a light shield or a film strength improver. These functions vary with carbon black products. Therefore, in the case where the magnetic recording medium of the invention has a multi-layered structure, it is of course possible to change kind, amount and combination of the carbon black in respective layers including the magnetic layer and select the afore-mentioned various properties including particle size, oil absorption, electric conductivity and pH depending upon the end purpose, or should rather be optimized in each layer.

Examples of the carbon black to be used include furnace black for rubber, thermal black for rubber, carbon black for color and acetylene black. The preferred carbon black has a specific surface area of from 5 to 500 $m^2/g$, a DBP absorptive capacity of from 10 to 400 ml/100 g, an average particle size of from 5 nm to 300 nm, a pH of from 2 to 10, a water content of from 0.1 to 10%, and a tap density of from. 0.1 to 1 g/cc.

Examples of commercially available products of carbon black to be used in the magnetic layer include BLACKPEARLS 2000, 1300, 1000, 900, 905, 800, 880,700, VULCAN XC-72 [products of Cabot Co.]; #80, #60, #55, #50 and #35 [products of Asahi Carbon Co., Ltd.], #10B, #30, #40, #650B, #850B, #900, #950, #970B, #1000, #2300, #2400B, #3050B, 3150B, 3250B, #3750B, #3950B MA-600 [products of Mitsubishi Chemical Corporation]; CONDUCTEX SC, SC-U, RAVEN15, 40, 50, 150, 1250, 1255, 1500, 1800, 2000, 2100, 3500, 5250, 5750, 7000, 8000, 8800 and RAVEN-MT-P [products of Colombian Carbon Co.]; KEETJENBLACK EC [product of Akzo Co.]. It is also possible to make reference to, for example, Carbon Black Binran compiled by Carbon Black Association.

Carbon black may be surface-treated with a dispersing agent or may be grafted with a resin, or carbon black surface may be partly converted to graphite before use. Also, in advance of its addition to a magnetic coating composition, carbon black may be dispersed into a binder. These carbon black products can be used independently or in combination thereof. In using carbon black, it is preferably used in an amount of from 0.1 to 30 parts by weight per 100 parts by weight of the ferromagnetic power.

<Other additives>

As additives to be added in the invention to the magnetic layer, those which exert a lubricating effect, an antistatic effect, a dispersing effect or a plasticizing effect may be used.

Examples to be used include molybdenum disulfide, tungsten disulfide, graphite, boron nitride, graphite fluoride, silicone oils, silicones having a polar group, fatty acid-modified silicones, fluorine-containing silicones, fluorine-containing alcohols, fluorine-containing esters, polyolefins, polyglycols, alkylphosphoric acid esters and the alkali metal salts thereof, alkylsulfuric acid esters and the alkali metal salts thereof, polyphenyl ethers, phenylphosphonic acid, $\alpha$-naphthylphosphoric acid, phenylphosphoric acid, diphenylphosphoric acid, pethylbenzenephosphonic acid, phenylphosphinic acid, aminoquinones, various silane coupling agents, titanium coupling agents, fluorine-containing alkylsuslfuric acid esters and the alkali metal salts thereof, monobasic fatty acids having from 10 to 24 carbon atoms (which may contain an unsaturated bond or may be branched) and the metal salts thereof (e.g., Li, Na, K and Cu), mono-, di-, tri-, tetra-, penta- or hexa-hydric alcohols having from 12 to 22 carbon atoms. (which may contain an unsaturated bond or may be branched), alkoxyalcohols having from 12 to 22 carbon atoms (which may contain an unsaturated bond or may be branched), monofatty acid esters, difatty acid esters or trifatty acid esters between a monobasic fatty acid having from 10 to 24 carbon atoms (which may contain an unsaturated bond or may be branched) and at least one of mono-, di-, tri-, tetra-, penta- or hexa-hydric alcohols having from 12 to 22 carbon atoms (which may contain an unsaturated bond or may be branched), fatty acid esters of monoalkyl ethers of alkylene oxide polymerization products, fatty acid amides having from 8 to 22 carbon atoms and aliphatic amines having from 8 to 22 carbon atoms.

The fatty acids in these specific examples include capric acid, caprylic acid, lauric acid, myristic acid, palmitic acid, stearic acid, behenic acid, oleic acid, elaidic acid, linoleic acid, linolenic acid and isostearic acid.

Examples of the esters include butyl stearate, octyl stearate, amyl stearate, isooctyl stearate, butyl myristate, octyl myristate, butoxyethyl stearate, butoxydiethyl stearate, 2-ethylhexyl stearate, 2-octyldodecylpalmitate, 2-hexyldodecyl palmitate, isohexadecyl stearate, oleyl oleate, dodecyl stearate, tridecylstearate, oleyl erucate, neopentyl glycol didecanoate and ethylene glycol dioleyl, and examples of the alcohols include oleyl alcohol, steary alcohol and lauryl alcohol.

As other additives, there may be used nonionic surfactants such as alkylene oxide-based surfactants, glycerin-based surfactants, glycidol-based surfactants and alkylphenol-ethylene oxide adducts; cationic surfactants such as cyclic amines, ester amides, quaternary ammonium salts, hydantoin derivatives, heterocyclic compounds, phosphoniums and sulfoniums; anionic surfactants having an acidic group such as carboxylic acid, sulfonic acid, phosphoric acid, sulfuric acid ester group or phosphoric acid ester group; and amphoteric surfactants such as amino acids, aminosulfonic acids, sulfuric and phosphoric acid esters of aminoalcohols and alkylbetaines may also be used. These surfactants are described in detail in Kaimen Kasseizai Binran published by Sangyo Tosho K.K.

To the magnetic layer of the magnetic recording medium of the invention can be added as a dispersant the aforesaid organic phosphoric acid compounds such as phenylphosphonic acid and benzylphosphonic acid.

These additives need not necessarily be 100% pure, and may contain isomers, unreacted compounds, side reaction products, decomposition products, oxides and other impurities in addition to the major components. The content of these impurities are preferably 30% by weight or less, more preferably 10% by weight or less.

These additives usable in the invention have individually different physical actions, and the kind, the amount and the addition ratio of the additives yielding some synergistic effects should be determined so as to obtain optimum results depending upon the end purpose.

The additives are added in a total amount of generally from 0.1% by weight to 50% by weight, preferably from 2% by weight to 25% by weight. Additionally, as has been described hereinbefore, it is preferred to control the amount of free P in the coated layer of the magnetic recording medium of the invention.

All or part of these additives usable in the invention may be added in any step of preparing the magnetic coating composition and the non-magnetic coating composition. For example, there are the case of mixing with a magnetic material prior to the kneading step, the case of adding in the step of kneading a magnetic material, a binder and a solvent, the case of adding in the dispersing step, and the case of adding immediately...before..coating. In some cases, the intended objects can be attained by coating part of, or .the whole of, the additives after or simultaneously with coating the magnetic layer depending upon the end purpose. Also, with some purposes, it is possible to coat a lubricant on the surface of the magnetic layer after calendaring or after completion of slitting.

[Support]

As the support to be used in the invention, a flexible support is preferred, and usable examples thereof include known films such as polyesters such as polyethylene terephthalate (PET) and polyethylene naphthalate (PEN); polyolefins; cellulose triacetate; polycarbonate; polyamide; polyimide; polyamideimide; polysulfone; and aromatic polyamides such as aramide. These supports may previously be subjected to corona discharge treatment, plasma treatment, adhesion-imparting treatment, thermal treatment and dust-removing treatment. In order to attain the objects of the invention, it is preferable that the surface roughness of the support be usually 0.03 $\mu$m or less, preferably 0.02 $\mu$m or less, more preferably 0.01 $\mu$m or less, in terms of center-line average surface roughness. Besides being small in center-line average surface roughness, it is advantageous that the support of the invention is free .of coarse projections measuring 1 $\mu$m or more in height. The surface roughness dimensions can be freely adjusted by selecting sizes and amounts of fillers added to the support as needed. Examples of such fillers include inorganic fine powders of oxides or carbonates of Ca, Si and Ti, and organic fine powders of acrylic resins.

The magnetic recording medium of the invention widely includes those which have a magnetic layer on the one side of a non-magnetic support. The magnetic recording medium of the invention includes those which have other layers than the magnetic layer. For example, the magnetic recording medium may have a back layer to be provided on the opposite side to the magnetic layer, a non-magnetic layer containing a non-magnetic powder, a soft magnetic layer containing a soft magnetic powder, a second magnetic layer, a cushioning layer, an overcoat layer, an adhesive layer and a protective layer. These layers can be provided at an appropriate position so as to effectively exhibit their functions.

[Non-magnetic layer]

A preferred embodiment of the magnetic recording medium of the invention is a magnetic recording medium having a non-magnetic layer containing a non-magnetic inorganic powder and a binder between the non-magnetic support and the magnetic layer.

(Non-magnetic inorganic powder)

The non-magnetic inorganic powder can be selected from among inorganic compounds such as metal oxides, metal carbonates, metal sulfates, metal nitrides, metal carbides and metal sulfides and non-magnetic metals.

As the inorganic compounds, titanium oxides ($TiO_2$, TiO), $\alpha$-alumina with an $\alpha$-conversion ratio of 90 to 100%, $\beta$-alumina, $\gamma$-alumina, $\alpha$-iron oxide, chromium oxide, zinc oxide, tin oxide, tungsten oxide, vanadium oxide, silicon carbide, cerium oxide, corundum, silicon nitride, titanium carbide, silicon dioxide, magnesium oxide, zirconium oxide, boron nitride, calcium carbonate, calcium sulfate, barium sulfate, molybdenum disulfide, goethite and aluminum hydroxide can be used independently or in combination thereof. Titanium dioxide, zinc oxide, iron oxide and barium sulfate are particularly preferred, with titanium dioxide being more preferred. Examples of the non-magnetic metals include Cu, Ti, Zn and Al.

The average particle size of the non-magnetic inorganic powder is preferably from 0.005 to 2 $\mu$m. However, the same effect can be obtained by combining, as needed, non-magnetic powders different from each other in average particle size or, in the case of using a s.ingle non-magnetic powder, by broadening the particle size distribution. Particularly preferred is a non-magnetic powder having an average particle size of from 0.01 $\mu$m to 0.2 $\mu$m. The pH of the non-magnetic powder is particularly preferably from 6 to 9. The specific surface area of the non-magnetic powder is preferably from 1 to 100 $m^2$/g, more preferably from 5 to 50 $m^2$/g, still more preferably from 7 to 40 $m^2$/g. The crystallite size of the non-magnetic powder is preferably from 0.01 $\mu$m to 2 $\mu$m. The oil absorption capacity using DBP is preferably from 5 to 100 ml/100 g, more preferably from 10 to 80 ml/100 g, still more preferably from 20 to 60 ml/100 g. The specific gravity is preferably from 1 to 12, more preferably from 3 to 6. The shape thereof may be any of the acicular shape, spherical shape, polyhedral shape and plate shape.

As the binder, lubricant, dispersing agent, additive, solvent, dispersing method and the like, those for the magnetic layer can be applied. In particular, with respect to the amount and kind of the binder, additives, amount and kind of dispersing agent, known art relating to the magnetic layer can be applied.

[Structure of each layer]

As to the thickness of each layer, the thickness of the magnetic layer is preferably 0.20 $\mu$ or less, more preferably from 0.05 to 0.2 $\mu$m; the thickness of the non-magnetic layer is preferably from 0.1 to 3 $\mu$m, more preferably from 0.5 to 3 $\mu$m, still more preferably from 0.8 to 3 $\mu$m. The thickness of the non-magnetic layer is preferably more than the thickness of the magnetic layer. Also, in the case where a soft magnetic layer is provided between the non-magnetic support and the magnetic layer, the thickness of the soft magnetic layer can be in the range of preferably from 0.8 to 3 $\mu$m. The total thickness of the magnetic recording medium of the invention is preferably 8 $\mu$m or less as a magnetic tape in view of attaining high capacity.

[Process for manufacturing magnetic recording medium]

The magnetic recording medium of the invention can be manufactured by, for example, applying each coating composition on the surface of a running non-magnetic support so that the thickness of each layer falls within the afore-mentioned range after drying. A plurality of coating compositions for forming a magnetic layer and coating compositions for forming a non-magnetic layer may be multilayer-applied sequentially or simultaneously.

As a coating machine for applying the coating composition for forming the magnetic layer, there may be utilized an air doctor coater, a blade coater, a rod coater, an extrusion coater, an air knife coater, a squeeze coater, a dip coater, a reverse roll coater, a transfer roll coater, a gravure coater, a kiss coater, a cast coater, a spray coater and a spin coater. As to these coaters, reference may be made to, for example, Saishin Coating Gijutsu published by K.K. Sogo Gijutsu Center (May 31, 1983).

In the case of manufacturing a magnetic recording tape having two or more layers on one side, there may be employed, for example, the following methods.

(1) A lower layer is first coated by means of a coating machine popularly employed in coating a magnetic coating composition, such as a gravure coater, a roll coater, a blade coater or an extrusion coater and, before the undercoat layer is dried, an upper layer is coated by using a support-pressing type extrusion coating machine disclosed in, for example, JP-B-1-46186, JP-A-60-238179 and JP-A-2-265672.

(2) A method of coating a lower layer and an upper layer almost at the same time by using a coating head having two slits for passing coating liquids as disclosed in JP-A-63-88080, JP-A-2-17971 and JP-A-2-265672.

(3) A method of coating a lower layer and an upper layer almost at the same time by using an extrusion coating machine equipped with a backup roll as disclosed in JP-A-2-174965.

The coated magnetic layer is dried after orienting the ferromagnetic powder contained in the magnetic layer in a magnetic field. The orienting treatment in a magnetic field can properly be conducted according to methods well known in the art.

After drying, the magnetic layer is subjected to surface-smoothening treatment by using, for example, a super-calender roll. The surface-smoothening treatment serves to remove voids generated upon removal of the solvent by drying and improve the packing ratio of the ferromagnetic powder in the magnetic layer. Thus, there can be obtained a magnetic recording tape having high electromagnetic conversion characteristics. As the calender-processing roll, rolls of heat-resistant plastics such as epoxy, polyimide, polyamide and polyimide are used. It is also possible to process with metal rolls.

The magnetic recording medium of the invention preferably has a surface with a good smoothness. In order to improve smoothness, it is effective to subject the magnetic layer having been formed by selecting a specific binder to the above-mentioned calender processing. The calender processing is conducted at a calender roll temperature of preferably from 60 to 100 °C, more preferably from 70 to 100 °C, particularly preferably from 80 to 100 °C and under a pressure of preferably from 98 to 490 kN/m (from 100 to 500 kg/cm), more preferably from 196 to 441 kN/m (from 200 to 450 kg/cm), particularly preferably from 294 to 392 kN/m (from 300 to 400 kg/cm). The thus calendered magnetic recording medium is generally subjected to thermal treatment.

The thus-obtained magnetic recording medium can be cut into desired size by using a cutting machine.

## EXAMPLES

The invention is described in more detail below by reference to Examples and Comparative Examples which, however, do not limit the invention. "Parts" in Examples are by weight.

[Sample1] to [Sample 3]

[Preparation of a coating solution for forming an upper magnetic layer and a coating solution for forming a lower magnetic layer]

<Components for forming the upper magnetic layer>

| | |
|---|---|
| Ferromagnetic metal powder | |
| Compositions Fe/Co=100/30 (atom ratio) | 100 parts |
| Hc: 189.600 kA/m (2400 Oe) | |
| $S_{BET}$: 70 m$^2$/g. | |
| Average major axis length: 60 nm | |

(continued)

Crystallite size: 13 nm (130 Å)
Saturation magnetization amount as: 125 A•m$^2$/kg (125 emu/g)
Surface-treated layer: Al$_2$O$_3$, Y$_2$O$_3$

| | |
|---|---|
| Vinyl chloride copolymer (made by Nippon Zeon; MR-110) | 15 parts |

Content of -SO3Na: 5x10-6 eq/g;
Polymerization degree: 350
Epoxy group (3.5% by weight based on monomer unit)

| | |
|---|---|
| Polyester polyurethane resin UR-8200 (manufactured by Toyobo) | 5 parts |
| α-Alumina (average particle size: 0.1 μm) | 6 parts |
| Carbon black (average particle size: 0.08 μm) | 0.5 part |
| Stearic acid | 2 parts |
| Methyl ethyl ketone | 150 parts |
| Cyclohexane | 100 parts |

<Components for forming the lower layer>

| | |
|---|---|
| Non-magnetic powder: αFe$_2$O$_3$ hematite | 80 parts |

Average major axis length: 0.15 μm
S$_{BET}$: 110 m$^2$/g
pH: 9.3
Tap density: 0.98
Surface-treated layer: Al$_2$O$_3$, SiO$_2$

| | |
|---|---|
| Carbon black (Mitsubishi Carbon K.K.) | 20 parts |

Average primary particle size: 16 nm
DBP oil absorption capacity: 80 ml/100 g
pH: 8.0
S$_{BET}$ : 250 m$^2$/g
Volatiles: 1.5%

| | |
|---|---|
| Vinyl chloride copolymer (manufactured by Nippon Zeon; MR-110) | 12 parts |
| Polyester polyurethane resin (manufactured by Toyobo; UR-8200) | 15 parts |
| Stearic acid | 2 parts |
| Methyl ethyl ketone | 150 parts |
| Cyclohexane | 100 parts |
| Toluene | 50 parts |

The components for forming the upper layer or the lower layer were kneaded in a kneader, then dispersed using a sand mill. 1.6 Parts of sec-butyl stearate (sec-BS) was added to the resulting dispersion for forming the upper layer, whereas 5 parts of the above-described polyisocyanate (Coronate L; manufactured by Nippon Polyurethane Co., Ltd.) was added to the dispersion for forming the lower layer.. Further, to each dispersion were added 40 parts of a mixture of methyl ethyl ketone and cyclohexanone, and the resulting mixtures were filtered through a filter of 1 μm in average pore size. Thus, there were prepared a coating solution for forming the upper layer and a coating solution for forming the lower layer.

[Preparation of a coating solution for forming a back layer]

<Components for forming a back layer>

| Fine particulate carbon black | 100 parts |
| Average particle size: 20 nm | |
| Coase particulate carbon black | 10 parts |
| Average particle size: 270 nm | |
| Nitrocellulose resin | a parts |
| Polyester polyurethane resin | b parts |
| Dispersing agent | |
|     Copper oleate | 10 parts |
|     Copper phthalocyanine | 10 parts |
|     Barium sulfate (precipitated) | 5 parts |
| Methyl ethyl ketone | 500 parts |
| Toluene | 500 parts |
| $\alpha$-Alumina (average particle size: 0.13$\mu$m) | 0.5 part |

The above-described components were kneaded in a continuous. kneader, followed by dispersing in a sand mill for 2 hours. To the resulting dispersion were added 40 parts of polyisocyanate [Coronate L; manufactured by Nippon Polyurethane Co., Ltd.] and 1,000 parts of methyl ethyl ketone, and the resulting mixture was filtered through a filter of 1 $\mu$m in average pore size to prepare a coating solution for forming a back layer. Additionally, parts of the binders of nitrocellulose resin and polyester polyurethane are shown in Table 1.

<Preparation of magnetic tape and method for its manufacture>

The thus-obtained coating solution for the upper layer and the coating solution for the lower layer were simultaneously multiple-layer coated on a polyethylene terephthalate (PET)-made non-magnetic support (thickness: 6 $\mu$m; surface swell on the side on which the magnetic layer is coated: 10%) so that the dry thickness of the lower layer became 1.3 $\mu$m and the dry thickness of the upper magnetic layer became 0.2 $\mu$m. Additionally, the surface swell was measured according to the scanning type white light interference method using a general-purpose three-dimensional surface structure analyzer, New View 5022 made by ZYGO, with a scan length of 5 $\mu$m. The measuring view was 350$\mu$m x 260$\mu$m. The measured surface was subjected to filter treatment ..of. HPF.: 50$\mu$m and LPF:OFF. to determine (sum of cross-sectional areas formed by slicing at a height of 5 nm)+(sum of cross-sectional areas formed by slicing at a depth of 5 nm), and the thus determined value was divided by the measurement view area. The surface swell was a percentage of the thus-calculated value. Measurement was conducted at 10 points, and the average value was used.

Subsequently, while the two layers were still in a wet state, they were subjected to orientation treatment using a cobalt magnet having a magnetic flux density of 3000 gausses (300 mT) and a solenoid having a magnetic flux density of 1500 gausses (150 mT), followed by drying to form a non-magnetic layer and a magnetic layer.

Then, the coating solution for the back layer was coated on the other side of the support in a dry thickness of 0.5 $\mu$m, followed by drying. Thus, there was obtained a roll of magnetic recording laminate comprising a support having provided on the one side the lower layer and the magnetic layer and on the other side the back layer.

The thus-obtained magnetic recording laminate roll was passed through a 7-stage calender machine constituted by heating metal rolls and elastic rolls comprising a core coated with a thermosetting resin to conduct calendering. Subsequently, the calender-treated magnetic recording laminate roll was slit with a width of 1.27cm (0.5 inch), then passed through a solenoid having a magnetic flux density of 3000 gausses (300 mT) to demagnetize.

Table 1

| | a | b | Modulus of elasticity of back layer |
|---|---|---|---|
| Sample 1 | 30 | 100 | 6.8 GPa (693kg/mm$^2$) |
| Sample 2 | 60 | 70 | 12.3 GPa (1254kg/mm$^2$) |
| Sample 3 | 100 | 30 | 20.5 GPa (2090kg/mm$^2$) |

[Sample 4]

A sample was prepared in the same manner as with sample 1 except for changing the average particle size of the coarse carbon black in the coating solution for the back layer to 95 nm.

[Sample 5]

A sample was prepared in the same manner as with sample 2 except for changing the average particle size of the coarse carbon black in the coating solution for the back layer to 95 nm.

[Sample 6]

A sample was prepared in the same manner as with sample 3 except for changing the average particle size of the coarse carbon black in the coating solution for the back layer to 95 nm.

[Sample 7]

A sample was prepared in the same manner as with sample 4 except for changing the amount of the coarse carbon black in the coating solution for the back layer to 40 parts.

<Evaluation methods>

[Method for measuring the number of depressions on the surface of the magnetic layer]

Measurement was conducted according to the scanning type white light interference method using a general-purpose three-dimensional surface structure analyzer, New View 5022 made by ZYGO, with a scan length of 5 $\mu$m. The measured surface was subjected to filter treatment of HPF: 1.65 $\mu$m and LPF: 50 $\mu$m, and the number of depressions having a depth of 1/3 or more of the recording bit length shown in Table 2 and having a cross-sectional area of 1/2 or more of the reproducing bit area shown in Table 2 was measured at 10 points, and the average value was shown in Table 2.

[Measurement of dropouts (DO)]

Measurement of DO was conducted by using a drum tester.

A signal of 0.15 to 0.10 $\mu$m in recording wavelength was recorded using a 1.5-T MIG head and reproduced by an MR head, and the obtained output was determined by means of a spectrum analyzer. Those which gave a 50%-dropped output were counted as DO, and the counted number was converted to a DO number per m. Samples of 5 DOs/m or less were rated as good with respect to DO. The track width of the MR head was as shown in Table 2.

Table 2

| | Sample No. | Length of recording bit (nm) | Track width ($\mu$m) | Reproducing bit area ($\mu$m$^2$) | Number of depressions on the surface of magnetic layer (number) | Number of DO (number/ m) |
|---|---|---|---|---|---|---|
| Ex.1 | 1 | 150 | 7 | 1.05 | 16 | 4.3 |
| Ex.2 | 2 | 150 | 7 | 1.05 | 19 | 4.8 |
| Ex.3 | 4 | 150 | 7 | 1.05 | 3 | 0.5 |
| Ex.4 | 5 | 150 | 7 | 1.05 | 9 | 2.2 |
| Ex.5 | 4 | 100 | 5 | 0.50 | 11 | 3.2 |
| Ex . 6 | 6 | 100 | 5 | 0.50 | 17 | 4.9 |
| Com. Ex.1 | 3 | 150 | 7 | 1.05 | 26 | 6.8 |
| Com. Ex.2 | 7 | 150 | 7 | 1.05 | 21 | 5.4 |
| Com. Ex.3 | 1 | 100 | 5 | 0.50 | 39 | 10.6 |
| Com. Ex.4 | 2 | 100 | 5 | 0.50 | 45 | 11.7 |

As can be seen from Table 2, dropout can be reduced to an extremely low level by controlling the depth and the number of depressions existing on the surface of the magnetic layer and controlling the cross-sectional area of the depressions. The invention can provide a magnetic recording medium which can reduce spacing loss and forms a reduced number of dropouts and shows a reduced error rate.

**Claims**

1. A magnetic recording and reproducing method of recording/reproducing information using a magnetic recording medium comprising a non-magnetic support, at least a magnetic layer on one side of the support and a back layer on the other side of the support, the magnetic layer containing a binder and a ferromagnetic powder dispersed in the binder,
   wherein the magnetic recording medium has on a surface of the magnetic layer 20/(260x350 $\mu m^2$) or less depressions with a depth of 1/3 or more of a recording bit length and a cross-sectional area of 1/2 or more of a reproducing bit area, and
   wherein the modulus of elasticity of the back layer is in the range of from 4.9 to 14.7 GPa.

2. The magnetic recording and reproducing method according to claim 1, wherein an MR head is used as a reproducing means for information.

3. A magnetic recording medium comprising a non-magnetic support, at least a magnetic layer on one side of the support and a back layer on the other side of the support, the magnetic layer containing a binder and a ferromagnetic powder dispersed in the binder,
   wherein the magnetic recording medium has on a surface of the magnetic layer 20/(260x350 $\mu m^2$) or less depressions with a depth of 1/3 or more of a recording bit length and a cross-sectional area of 1/2 or more of a reproducing bit area, and
   wherein the modulus of elasticity of the back layer is in the range of from 4.9 to 14.7 GPa.

4. The magnetic recording medium according to claim 3, wherein the magnetic layer has a thickness of 0.20 $\mu m$ or less.

5. The magnetic recording medium according to claim 3, wherein the magnetic recording medium has a total thickness of 8 $\mu m$ or less.

6. The magnetic recording and reproducing method according to claim 1 or magnetic recording medium according to claim 3, wherein the magnetic recording medium has on a surface of the magnetic layer 15/(260x350 $\mu m^2$) or less depressions with a depth of 1/3 or more of a recording bit length and a cross-sectional area of 1/2 or more of a reproducing bit area.

7. The magnetic recording medium according to claim 3, wherein the magnetic recording medium further comprises a non-magnetic layer between the non-magnetic support and the magnetic layer.

**Patentansprüche**

1. Magnetisches Aufzeichnungs- und Wiedergabeverfahren zum Aufzeichnen/Wiedergeben von Information unter Verwendung eines magnetischen Aufzeichungsmediums umfassend einen nicht-magnetischen Träger, wenigstens eine magnetische Schicht auf einer Seite des Trägers und eine Rückschicht auf der anderen Seite des Trägers, wobei die magnetische Schicht ein Bindemittel und ein in dem Bindemittel dispergiertes ferromagnetisches Pulver enthält,
   wobei das magnetische Aufzeichnungsmedium auf einer Oberfläche der magnetischen Schicht 20/(260x350 $\mu m^2$) oder weniger Vertiefungen mit einer Tiefe von 1/3 oder mehr einer Aufzeichnungsbitlänge und einer Querschnittsfläche von 1/2 oder mehr einer Aufzeichnungsbitfläche aufweist, und
   wobei der Elastizitätsmodul der Rückschicht im Bereich von 4,9 bis 14,7 GPa liegt.

2. Magnetisches Aufzeichnungs- und Wiedergabeverfahren gemäß Anspruch 1, wobei ein MR-Kopf als Wiedergabemittel für Information verwendet wird.

3. Magnetisches Aufzeichnungsmedium umfassend einen nicht-magnetischen Träger, wenigstens eine magnetische Schicht auf einer Seite des Trägers und eine Rückschicht auf der anderen Seite des Trägers, wobei die magnetische Schicht ein Bindemittel und ein in dem Bindemittel dispergiertes ferromagnetisches Pulver enthält,
wobei das magnetische Aufzeichnungsmedium auf einer Oberfläche der magnetischen Schicht 20/(260x350 $\mu m^2$) oder weniger Vertiefungen mit einer Tiefe von 1/3 oder mehr einer Aufzeichnungsbitlänge und einer Querschnittsfläche von 1/2 oder mehr einer Aufzeichnungsbitfläche aufweist, und
wobei der Elastizitätsmodul der Rückschicht im Bereich von 4,9 bis 14,7 GPa liegt.

4. Magnetisches Aufzeichnungsmedium gemäß Anspruch 3, wobei die magnetische Schicht eine Dicke von 0,20 $\mu m$ oder weniger aufweist.

5. Magnetisches Aufzeichnungsmedium gemäß Anspruch 3, wobei das magnetische Aufzeichnungsmedium eine Gesamtdicke von 8 $\mu m$ oder weniger aufweist.

6. Magnetisches Aufzeichnungs- und Wiedergabeverfahren gemäß Anspruch 1 oder magnetisches Aufzeichnungsmedium gemäß Anspruch 3, wobei das magnetische Aufzeichnungsmedium auf einer Oberfläche der magnetischen Schicht 15/(260x350 $\mu m^2$) oder weniger Vertiefungen mit einer Tiefe von 1/3 oder mehr einer Aufzeichnungsbitlänge und einer Querschnittsfläche von 1/2 oder mehr einer Aufzeichnungsbitfläche aufweist.

7. Magnetisches Aufzeichnungsmedium gemäß Anspruch 3, wobei das magnetische Aufzeichnungsmedium ferner eine nichtmagnetische Schicht zwischen dem nicht-magnetischen Träger und der magnetischen Schicht umfaßt.

**Revendications**

1. Procédé d'enregistrement et de reproduction magnétique d'une information d'enregistrement/de reproduction en utilisant un support d'enregistrement magnétique comprenant un support non magnétique, au moins une couche magnétique sur un côté du support et une couche arrière sur l'autre côté du support, la couche magnétique contenant un liant et une poudre ferromagnétique dispersée dans le liant,
dans lequel le support d'enregistrement magnétique comporte, sur une surface de la couche magnétique, 20/(260 x 350 $\mu m^2$) dépressions ou moins présentant une profondeur de 1/3 ou plus d'une longueur binaire d'enregistrement et une aire en coupe transversale de 1/2 ou plus d'une aire binaire de reproduction ; et
dans lequel le module d'élasticité de la couche arrière est dans la plage qui va de 4,9 à 14,7 GPa.

2. Procédé d'enregistrement et de reproduction magnétique selon la revendication 1, dans lequel une tête MR est utilisée en tant que moyen de reproduction pour l'information.

3. Support d'enregistrement magnétique comprenant un support non magnétique, au moins une couche magnétique sur un côté du support et une couche arrière sur l'autre côté du support, la couche magnétique contenant un liant et une poudre ferromagnétique dispersée dans le liant,
dans lequel le support d'enregistrement magnétique comporte, sur une surface de la couche magnétique, 20/(260 x 350 $\mu m^2$) dépressions ou moins présentant une profondeur de 1/3 ou plus d'une longueur binaire d'enregistrement et une aire en coupe transversale de 1/2 ou plus d'une aire binaire de reproduction ; et
dans lequel le module d'élasticité de la couche arrière est dans la plage qui va de 4,9 à 14,7 GPa.

4. Support d'enregistrement magnétique selon la revendication 3, dans lequel la couche magnétique présente une épaisseur de 0,20 $\mu m$ ou moins.

5. Support d'enregistrement magnétique selon la revendication 3, dans lequel le support d'enregistrement magnétique présente une épaisseur totale de 8 $\mu m$ ou moins.

6. Procédé d'enregistrement et de reproduction magnétique selon la revendication 1, ou support d'enregistrement magnétique selon la revendication 3, dans lequel le support d'enregistrement magnétique comporte, sur une surface de la couche magnétique, 15/(260 x 350 $\mu m^2$) dépressions ou moins présentant une profondeur de 1/3 ou plus d'une longueur binaire d'enregistrement et une aire en coupe transversale de 1/2 ou plus d'une aire binaire de reproduction.

7. Support d'enregistrement magnétique selon la revendication 3, dans lequel le support d'enregistrement magnétique comporte en outre une couche non magnétique entre le support non magnétique et la couche magnétique.

## REFERENCES CITED IN THE DESCRIPTION

### Patent documents cited in the description

- JP 2001084549 A
- JP 2004094988 A
- JP 62256219 A
- JP 1046186 B
- JP 60238179 A
- JP 2265672 A
- JP 63088080 A
- JP 2017971 A
- JP 2174965 A

### Non-patent literature cited in the description

- Plastic Handbook. Asakura Shoten
- Carbon Black Binran. Carbon Black Association
- Kaimen Kasseizai Binran. Sangyo Tosho K.K
- Saishin Coating Gijutsu. K.K. Sogo Gijutsu Center, 31 May 1983